# EUROPÄISCHE PATENTSCHRIFT

(11) **EP 3 478 860 B1**
(45) Veröffentlichungstag und Bekanntmachung des Hinweises auf die Patenterteilung: **19.02.2020**
(21) Anmeldenummer: 17733339.0
(22) Anmeldetag: 19.06.2017
(51) Int. Cl.: C21C 5/35, C21C 5/46, C21C 5/48, C21C 5/50, C21C 5/56, F27D 13/00

(54) **VERFAHREN ZUR STAHLERZEUGUNG UNTER EINSATZ STÜCKIGER EISENTRÄGER**
METHOD FOR PRODUCING STEEL USING LUMP IRON CARRIERS
PROCÉDÉ DE PRODUCTION D'ACIER À PARTIR DE SUPPORTS FERREUX EN MORCEAUX

(30) Priorität: 29.06.2016 AT 505862016
(43) Veröffentlichungstag der Anmeldung: 08.05.2019
(73) Patentinhaber: Fritz, Ernst, 4020 Linz (AT)
(72) Erfinder: Fritz, Ernst, 4020 Linz (AT)
(74) Vertreter: Hübscher & Partner Patentanwälte GmbH
(86) Internationale Anmeldenummer: PCT/AT2017/050014
(87) Internationale Veröffentlichungsnummer: WO 2018/000004

(56) Entgegenhaltungen:
- GB-A- 190 926 551
- US-A- 3 972 708
- US-A- 4 198 230

## Beschreibung

### Technisches Gebiet

Die Erfindung bezieht sich auf ein Verfahren zur Stahlerzeugung unter Einsatz stückiger Eisenträger in einem um eine horizontale Drehachse drehbaren Konverter, wobei in den heißen Konverter, der durch eine einem Konverterboden gegenüberliegende Konvertermündung mit stückigen Eisenträgern beschickt wurde, Brennstoff und oxidierendes Gas durch Düsen im Bereich des Konverterbodens eingedüst und die heißen Brenngase durch das Beschickungsgut geleitet werden, bevor dem vorgeheizten Beschickungsgut Eisenschmelze zugeführt und die Schmelze in einer Blasestellung des Konverters zu Stahl gefrischt wird.

### Stand der Technik

Um den Anteil fester Eisenträger, wie Schrott, vorreduzierte Pellets, Eisenschwamm, festes Roheisen u. dgl., bei der Stahlerzeugung zu vergrößern, ist es bekannt (AT 381 955 B), einen heißen Konverter mit den stückigen Eisenträgern durch eine obere Konvertermündung zu beschicken und das Beschickungsgut mit heißen Brenngasen vorzuheizen, die durch Einblasen flüssiger oder gasförmiger Brennstoffe einerseits und oxidierender Gase anderseits durch Düsen aus konzentrischen Rohren genährt werden und das Beschickungsgut von unten nach oben durchströmen, bevor flüssiges Roheisen nachchargiert und der gesamte Einsatz in herkömmlicher Art gefrischt wird. Es hat sich allerdings gezeigt, dass mithilfe der Zufuhr von Brennstoff und oxidierendem Gas durch Düsen im Konverterboden keine über den Querschnitt des Beschickungsguts gleichmäßige Verteilung der heißen Brenngase erreicht werden kann. Da sich die bodenseitigen Düsen sowohl beim Drehen des mit Schmelze und Schlacke gefüllten Konverters zur Probenentnahme als auch zum Abstich außerhalb der jeweiligen Schlackenlinie befinden müssen, können diese Düsen nur in einem begrenzten Mittenbereich des Konverterbodens angeordnet werden. Außerdem schließt sich an den Konverterboden ein Konus des Konvertergefäßes an, sodass die Düsen nur über einen vergleichsweise kleinen Querschnittsbereich des Beschickungsguts verteilt sind. Dazu kommt, dass die in Bodennähe wie Schneidbrenner wirksamen heißen Brenngase im Beschickungsgut vertikale Strömungskanäle ausbilden, was einer Verteilung der Brenngase über einen größeren Querschnittsbereich entgegensteht, sodass das Beschickungsgut nur bereichsweise innerhalb einer wirtschaftlichen Vorheizzeit auf eine entsprechende Temperatur erhitzt werden kann, was wiederum dazu führt, dass der mögliche Schrotteinsatz beschränkt bleibt. Weiterhin offenbaren GB190926551, US3972708A und US4198230A ein um eine horizontale Drehachse drehbaren Konverter, wobei in den heißen Konverter, der durch eine einem Konverterboden gegenüberliegende Konvertermündung mit stückigen Eisenträgern beschickt werden kann.

### Darstellung der Erfindung

Der Erfindung liegt somit die Aufgabe zugrunde, ein Verfahren zur Stahlerzeugung so auszugestalten, dass der Anteil der stückigen Eisenträger bei der Stahlerzeugung deutlich vergrößert werden kann.

Ausgehend von einem Verfahren der eingangs geschilderten Art löst die Erfindung die gestellte Aufgabe dadurch, dass der mit stückigen Eisenträgern beschickte Konverter nach einem Verschließen der Konvertermündung mit einem das Beschickungsgut zurückhaltenden Rost aus seiner Beschickungsstellung um die Drehachse in eine Vorheizstellung mit nach oben weisendem Konverterboden gedreht wird, bevor der Brennstoff und das oxidierende Gas durch die Düsen im Bereich des Konverterbodens in den sich oberhalb des Beschickungsguts bildenden Brennraum eingedüst und die das Beschickungsgut durchströmenden Brenngase durch den Rost abgeführt werden, und dass nach dem Vorheizen des Beschickungsguts der Konverter zum Zuführen der Eisenschmelze in seine Beschickungsstellung zurückgedreht und die Konvertermündung geöffnet wird.

Da nach dem Beschicken des Konverters mit stückigen Eisenträgern der Konverter aus seiner Beschickungsstellung um seine horizontale Drehachse so gedreht wird, dass sich der Konverterboden oben und die durch einen Rost abgedeckte Konvertermündung unten befinden, ruht das Beschickungsgut in dieser Vorheizstellung auf dem Rost und dem oberen Konus des Konvertermantels auf, wobei sich zwischen dem Beschickungsgut und dem Konverterboden ein Brennraum öffnet, in den die Düsen zum Zuführen einerseits des Brennstoffs und anderseits des oxidierenden Gases münden, das reiner Sauerstoff, aber auch ein Sauerstoff-Gasgemisch sein kann. Demzufolge verteilen sich die entstehenden, aufgrund der Verbrennung ein wesentlich größeres Volumen einnehmenden Brenngase in diesem Brennraum und bauen in Verbindung mit dem durch das Beschickungsgut bedingten Strömungswiderstand einen Überdruck auf, der für eine über den gesamten Querschnitt gleichmäßige Durchströmung des Beschickungsguts mit den Brenngasen von oben nach unten sorgt, bevor die Brenngase durch den das Beschickungsgut zurückhaltenden Rost abgezogen werden. Da in dieser Vorheizstellung der Konverter durch seinen Boden nach oben wärmegedämmt abgeschlossen ist, entfallen die sonst durch die Konvertermündung unvermeidbaren Wärmeverluste. Nach einer weitgehend gleichmäßige Erhitzung des Beschickungsguts kann dann nach einem Rückdrehen des Konverters in seine Beschickungsstellung und ein Entfernen des Rosts von der Konvertermündung dem Beschickungsgut in herkömmlicher Weise Eisenschmelze zugeführt und das Beschickungsgut mit der Eisenschmelze zu Stahl gefrischt werden.

Um im Beschickungsgut vorhandene Brennstoffe für die Vorheizung des Beschickungsguts vorteilhaft nützen zu können, können diese Brennstoffe in der Blasestellung des Konverters mit nach oben weisender Konvertermündung durch bodenseitiges Eindüsen von Brennstoff und oxidierendem Gas zumindest teilweise verbrannt werden, bevor die Konvertermündung mit dem Rost verschlossen und der Konverter in die Vorheizstellung verschwenkt wird. Es ist aber auch möglich, im Beschickungsgut vorhandene Brennstoffe in der Blasestellung des Konverters auch durch Aufblasen von Sauerstoff auf das Beschickungsgut zumindest teilweise zu verbrennen, bevor der Konverter aus der Blasestellung in die Vorheizstellung gedreht wird. In beiden Fällen wird das Beschickungsgut mithilfe des enthaltenen Brennstoffs in an sich bekannter Weise vorgewärmt und durch die anschließende gleichmäßige Erhitzung des Beschickungsguts in der Vorheizstellung des Konverters mit den das Beschickungsgut von oben nach unten durchströmenden Brenngasen auf die gewünschte hohe Temperatur gebracht.

Um das gleichmäßige Durchströmen des Beschickungsguts mit den heißen Brenngasen zu unterstützen, kann der Konverter während des Vorheizens des Beschickungsguts aus der Vorheizstellung hin- und hergeschwenkt werden, sodass sich das Beschickungsgut besser setzen kann und etwas gemischt wird, womit für eine gleichmäßigere Lückenverteilung im Beschickungsgut gesorgt werden kann.

Zur Verbesserung der Vorheizung kann das Beschickungsgut in der Vorheizstellung des Konverters durch Brenngase zusätzlich erhitzt werden, für die Brennstoff und oxidierendes Gas durch den Konvertermantel und dessen feuerfeste Auskleidung unmittelbar in das Beschickungsgut eingeblasen werden. Damit wird eine zusätzliche Erhitzung des Beschickungsguts im Bereich der Konverterauskleidung möglich, was zu einer gleichmäßigen Erhitzung des Beschickungsguts im Mantelbereich der Gutsäule beitragen kann. Brennstoff und oxidierende Gase können dabei durch das Abstichloch des Konverters und/oder im Bereich des oberen Konverterkonus angeordnete Düsen eingeblasen werden.

Aufgrund der weitgehend gleichmäßigen Erhitzung des Beschickungsguts kann das Vorheizen des Beschickungsguts in einfacher Weise wirksam gesteuert werden, indem in der Vorheizstellung des Konverters die Zufuhr von Brennstoff und oxidierendem Gas durch die Düsen im Bereich des Konverterbodens in Abhängigkeit von der Temperatur der aus dem die Konvertermündung verschließenden Rost austretenden Abgase gesteuert wird. Der Verlauf des Vorheizens kann selbstverständlich auch zusätzlich in Abhängigkeit von einer chemischen Analyse der aus dem Rost austretenden Abgase vorgegeben werden, was jedoch mit einem entsprechenden Aufwand verbunden ist.

Für das erfindungsgemäße Vorheizen des Beschickungsguts kommen gasförmige, flüssige und/oder fein gemahlene feste Brennstoffe, wie Kohle und Koks, infrage. Als gasförmige Brennstoffe eignen sich insbesondere Erdgas, Propan bzw. Butan oder Koksofengas. Zu den bevorzugt einsetzbaren flüssigen Brennstoffen zählen leichtes Dieselöl, aber auch vorgewärmtes schweres Heizöl, Rohteer, Rohöl und Raffinerierückstände. Geeignete feste Brennstoffe umfassen feinst gemahlene Anthrazite, Gasflammkohlen, Braunkohle, Braunkohlenkoks und Hochofenkoks. Die gasförmigen und flüssigen Brennstoffe lassen sich einfach in der Vorheizstellung des Konverters durch die Ringspalte der bodenblasenden Düsen in den Brennraum zwischen Beschickungsgut und Konverterboden einleiten. Bei einer geringen Anzahl von Düsen ist der Brennstoff auch durch das Zentralrohr wenigstens eines Teils der Mehrrohrdüsen in den Brennraum einzubringen. Diese Zentralrohre können später beim Frischen des gesamten Konvertereinsatzes nach einem Spülen der Leitungen mit Stickstoff als bodenblasende Düsen verwendet werden. Feste, pulverförmige Brennstoffe können durch einzelne wiederum zum Frischen einsetzbare Zentralrohre der Düsen in den Brennraum eingeblasen werden.

Zur Steigerung des Anteils des Beschickungsguts am Gesamteinsatz kann dem Beschickungsgut vor dem Vorheizen stückige Kohle oder Koks bis zu einer Menge von etwa 30 kg/t Flüssigstahl zugemischt werden. Feingemahlene feste, gasförmige und/oder flüssige Brennstoffe können zu diesem Zweck in erheblich größeren Mengen auch während des dem Vorheizen folgenden Frischvorgangs in die Schmelze eingeblasen werden.

### Kurze Beschreibung der Erfindung

Anhand der Zeichnung wird das erfindungsgemäße Verfahren zur Stahlerzeugung näher erläutert. Es zeigen
- Fig. 1: einen Konverter zur Durchführung des erfindungsgemäßen Verfahrens in einer Beschickungsstellung in einem schematischen Axialschnitt,
- Fig. 2: diesen Konverter in einem Schnitt nach der Linie II-II der Fig. 1,
- Fig. 3: den mit stückigen Eisenträgern beschickten Konverter in der Vorheizstellung und
- Fig. 4: den Konverter in der Blasestellung zum Frischen des Gesamteinsatzes.

### Weg zur Ausführung der Erfindung

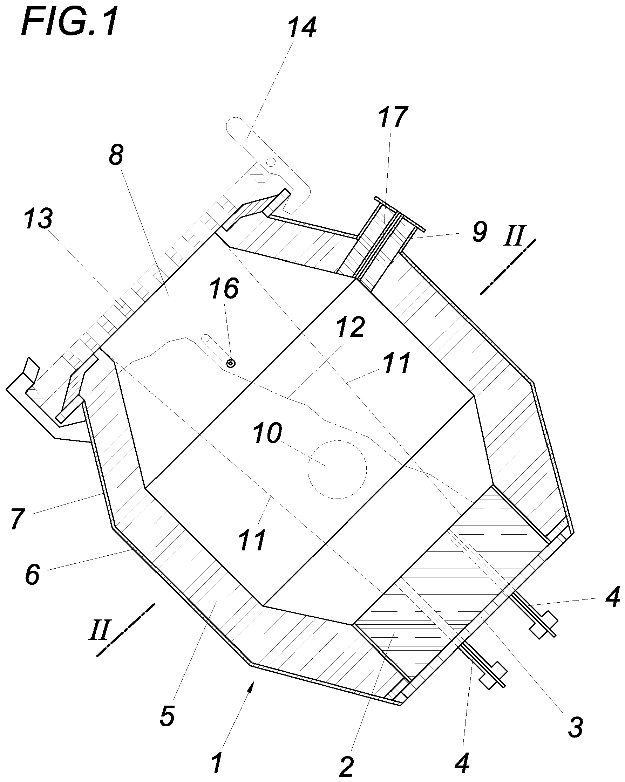

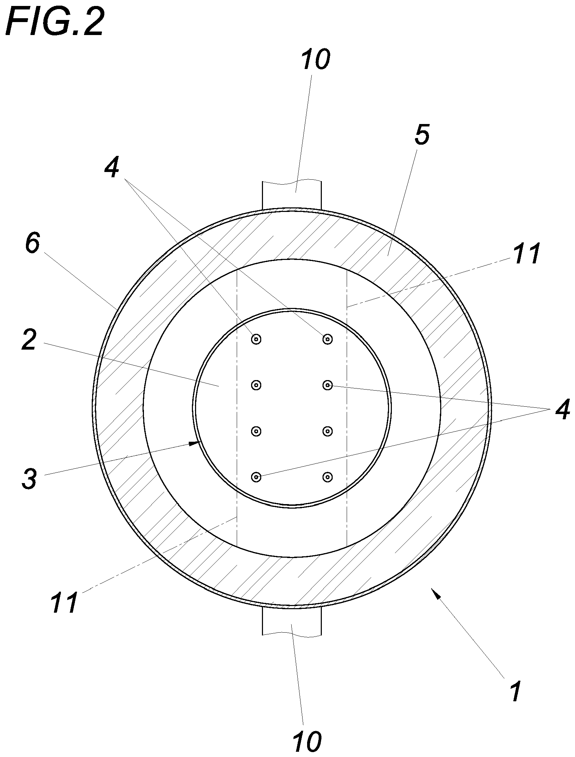

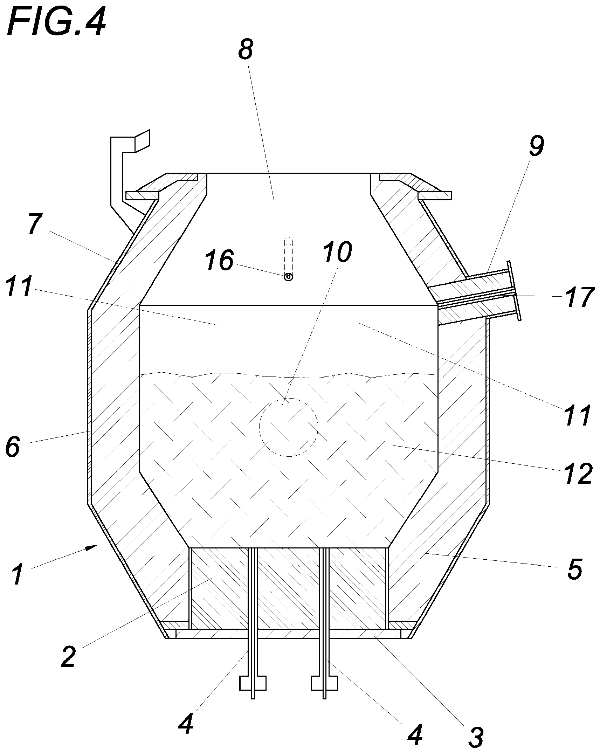

Der beispielsweise durch die Einführung des erfindungsgemäßen Verfahrens von einem autothermem auf einen allothermen Betrieb umgestellte Konverter 1 weist gemäß den Fig. 1 und 2 einen mit einer feuerfesten Auskleidung 2 versehenen Konverterboden 3 auf, der von Düsen 4 durchsetzt ist. Der ebenfalls mit einer feuerfesten Auskleidung 5 versehene Konvertermantel 6 endet über einen oberen Konus 7 in einer Konvertermündung 8. Der Konvertermantel 6 ist außerdem mit einem Abstichloch 9 versehen. Der Konverter 1 selbst ist um eine durch Lagerzapfen gebildete, horizontale Drehachse 10 drehbar gelagert. Die Schlackenlinien 11, die den Grenzverlauf der Schlackenoberfläche bei gekipptem Konverter 1 angeben, bevor die Schlacke aus der Konvertermündung 8 austritt, begrenzen gemäß den Fig. 1 und 2 jenen Bodenbereich, in dem die Düsen 4 angeordnet werden müssen, damit sie beim Kippen des Konverters 1 oberhalb der Schlackenlinie 11 liegen. Wird der Konverter 1 in der Beschickungsstellung nach der Fig. 1 mit stückigen Eisenträgern beschickt und danach das Beschickungsgut 12 in an sich bekannter Weise vorgeheizt, indem in der Blasestellung des Konverters nach der Fig. 4 durch die Düsen 4 Brennstoff und oxidierendes Gas in das Beschickungsgut 12 eingeblasen werden, so können die sich bildenden Brenngase nur in einem beschränkten Querschnittsbereich die Säule des Beschickungsguts 12 durchströmen, weil die Düsen 4 nur in einem durch die Schlackenlinien 11 begrenzten Bodenbereich angeordnet werden können und sich durch die heißen Brenngase oberhalb der Düsenmündungen im Beschickungsgut 12 vertikale Strömungskanäle ausbilden, durch die die heißen Brenngase bevorzugt strömen, sodass sich keine gleichmäßige Vorheizung des Beschickungsguts 12 über den Querschnitt der Gutsäule ergeben kann und die durchschnittliche Temperatur des Beschickungsguts bzw. dessen Wärmeinhalt niedrig bleibt.

Zur Einleitung der Brennstoffe und der oxidierenden Gase sind die Düsen 4 als Mehrrohrdüsen ausgebildet, wobei üblicherweise durch das Zentralrohr die oxidierenden Gase, insbesondere ein Gemisch aus Sauerstoff und Stickstoff bzw. Sauerstoff und Druckluft, und durch die Ringspalte der die Zentralrohre umschließenden Düsenrohre vorzugsweise gasförmiger und/oder flüssiger Brennstoff eingeblasen werden. Bei niedrigem Gasvordruck bzw. bei einer geringen Anzahl von Düsen 4 können jedoch auch durch die Zentralrohre einiger Düsen 4 gasförmige und/oder pulverförmige Brennstoffe in den Brennraum eingebracht werden.

Damit eine über den Querschnitt gleichmäßige Vorheizung des Beschickungsguts 12 erreicht werden kann, wird erfindungsgemäß die Konvertermündung 8 nach der Beschickung des Konverters 1 mit den stückigen Eisenträgern in der in Fig. 1 dargestellten Beschickungsstellung durch einen in der Fig. 1 strichpunktiert angedeuteten Rost 13 verschlossen, der auf die Konvertermündung 8 aufgesetzt und am Konverter 1 lösbar befestigt wird, beispielsweise mithilfe eines Schnellverschlusses 14. Dieser Rost 13 ist so ausgebildet, dass er die Gewichtsbelastung durch das Beschickungsgut 12 aufnehmen kann und das Beschickungsgut 12 zurückhält, jedoch für die Brenngase durchlässig ist.

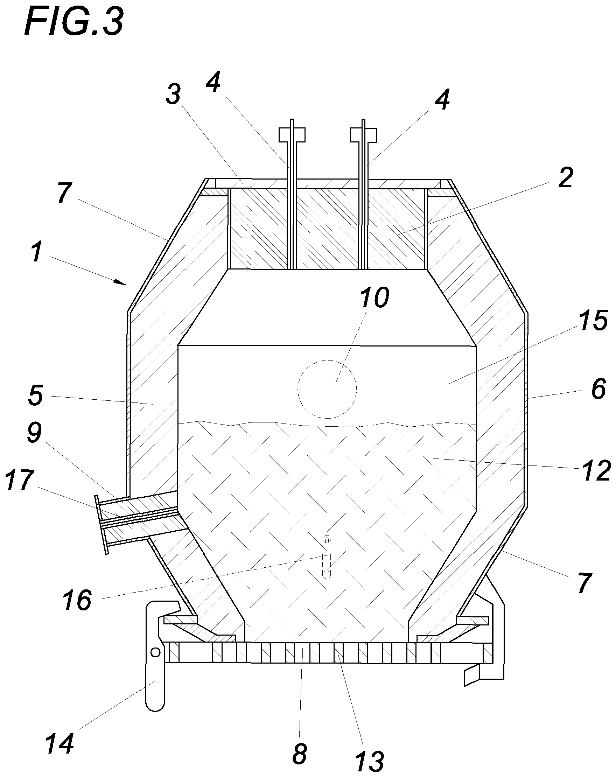

Aufgrund des Verschlusses der Konvertermündung 8 durch den Rost 13 kann der Konverter 1 mit dem aufgenommenen Beschickungsgut 12 um die Drehachse 10 aus der Beschickungsstellung der Fig. 1 in eine Vorheizstellung nach der Fig. 3 gedreht werden, in der die Konvertermündung 8 nach unten weist und der Konverterboden 3 den Konverter 1 nach oben abschließt. Das bei der Drehung des Konverters 1 zur Konvertermündung 8 verlagerte Beschickungsgut 12 wird durch den Rost 13 im Konverter 1 zurückgehalten, wobei zwischen dem Beschickungsgut 12 und dem Konverterboden 3 ein Brennraum 15 frei wird, in den die Düsen 4 münden. Zur Einleitung der Brennstoffe und der oxidierenden Gase sind die Düsen 4 als Mehrrohrdüsen ausgebildet, wobei üblicherweise durch das Zentralrohr die oxidierenden Gase, insbesondere ein Gemisch aus Sauerstoff und Stickstoff bzw. Sauerstoff und Druckluft, und durch die Ringspalte der die Zentralrohre umschließenden Düsenrohre vorzugsweise gasförmiger und/oder flüssiger Brennstoff eingeblasen werden. Bei niedrigem Gasvordruck bzw. bei einer geringen Anzahl von Düsen 4 können jedoch auch durch die Zentralrohre einiger Düsen 4 gasförmige und/oder pulverförmige Brennstoffe in den Brennraum 15 eingebracht werden.

Die durch das Einblasen von Brennstoff und oxidierendem Gas im Brennraum 15 entstehenden Brenngase verteilen sich im Brennraum 15, wobei im Brennraum 15 durch die verbrennungsbedingte Vergrößerung des Gasvolumens und dem sich durch das Beschickungsgut 12 ergebenden Strömungswiderstand ein Überdruck aufbaut, der für eine gleichmäßige Durchströmung des Beschickungsguts 12 von oben nach unten sorgt. Der obere Konus 7 des Konverters 1 unterstützt dabei die gleichmäßige Beaufschlagung des Beschickungsguts 12 mit den heißen Brenngasen, die nach der Wärmeabgabe an das Beschickungsgut 12 durch den Rost 13 abgezogen werden. Da der Konverter 1 in der Vorheizstellung nach der Fig. 3 nach oben durch den Boden 3 wärmeisoliert abgeschlossen ist, treten keine in der Beschickungsstellung unvermeidbare Wärmeverluste auf, sodass der Wirkungsgrad der Vorheizung erheblich verbessert wird. Durch die qualifizierte Vorheizung des Beschickungsguts 12 kann der Anteil der eingesetzten stückigen Eisenträger im Vergleich zur eingesetzten Eisenschmelze deutlich erhöht werden.

Um die Eisenschmelze zuführen zu können, ist der Konverter 1 nach der Vorheizung des Beschickungsguts 12 wieder zurück in die Beschickungsstellung zu drehen, damit der Rost 13 abgenommen oder weggeschwenkt und der Konverter 1 mit der Eisenschmelze beschickt werden kann, um die Eisenschmelze und das Beschickungsgut in der in der Fig. 4 gezeichneten Blasestellung in herkömmlicher Weise zu flüssigem Stahl frischen zu können.

Damit im Beschickungsgut 12 vorhandene Brennstoffe gut genützt werden können, ohne die Vorheizung mit den von oben nach unten durch das Beschickungsgut 12 strömenden Brenngasen zu beeinträchtigen, können diese Brennstoffe in der Blasestellung des Konverters 1 nach Fig. 4 durch zusätzliches Zuführen von Brennstoff und oxidierendem Gas durch die Düsen 4 zumindest teilweise verbrannt werden, bevor die eigentliche Vorheizung des Beschickungsguts 12 in der Vorheizstellung des Konverters 1 gemäß Fig. 3 eingeleitet wird.

Zur Unterstützung der Vorheizung des Beschickungsguts 12 kann zusätzlich Brennstoff und oxidierendes Gas durch Düsen 16 im Bereich des Konvertermantels 6 in das Beschickungsgut 12 eingeblasen werden. Diese Düsen 16 dürfen allerdings in keiner Konverterstellung in die Schmelze eintauchen. Für den gleichen Zweck kann das Abstichloch 9 mit einer ausbaubaren Düse 17 oder einem Brenner versehen werden, der jedoch nach dem Vorheizvorgang entfernt werden muss.

### Ausführungsbeispiel:

Ein durch eine bodenseitige Sauerstoffzufuhr und ein Aufblasen von Sauerstoff autotherm betriebener 205 t Konverter mit einem inneren Volumen von 205 m³, einem Konverterboden mit 8 Zweirohrdüsen wurde für das erfindungsgemäße Vorheizen von Stahlschrott umgerüstet. Die Zweirohrdüsen wurden durch Dreirohrdüsen mit je zwei Ringspalten ersetzt. Die Konvertermündung wurde mit einem abnehmbaren Rost versehen. In der Vorheizstellung des Konverters mit nach oben weisendem Konverterboden und nach unten weisender, durch den Rost verschlossener Konvertermündung werden die aus dem Rost austretenden Brenngase einer Entstaubung zugeführt. Bei dem der Schrottvorheizung nachfolgenden Frischvorgang wird Sauerstoff von oben durch eine Nachverbrennungslanze auf die Schmelze geblasen. Während des Frischvorgangs wird in die Schmelze von unten Kalkstaub mit Sauerstoff eingeblasen. Ohne Schrottvorheizung und ohne Kohleeinblasen betrug der Schrotteinsatz 24 % (240 kg/t) bezogen auf das Flüssigstahlgewicht. Das Roheisen (173,625 t) hatte 1330 °C und wies 4,25 Gew.% C, 0,59 Gew.% Si, 0,52 Gew.% Mn und 0,027 Gew.% P auf. Die Abstichtemperatur betrug 1625 °C. Der Kohlenstoffgehalt im Flüssigstahl betrug 0,026 Gew.%.

Bei übereinstimmender Roheisenzusammensetzung, gleicher Abstichtemperatur, einem Kohlenstoffgehalt von 0,027 Gew.% beim Abstich und bei übereinstimmender Schlackenanalyse konnte durch ein erfindungsgemäßes Vorheizen während 12 Minuten der Schrotteinsatz von 49,2 auf 74,835 t, d.h. von 24 auf 36,5 Gew.%, erhöht werden. Beim dem Vorheizen folgenden Frischen wurden je Tonne Flüssigstahl 30 kg Kalkstaub und 44 Nm³ Sauerstoff in die Schmelze eingeblasen. Außerdem wurden je Tonne Flüssigstahl 16 kg stückiger dolomitischer Kalk zugegeben. Der Eisenoxidgehalt in der in einer Menge von 90 kg pro t Stahl anfallenden Schlacke betrug 20,6 Gew.%.

Um diese Schrotteinsatzerhöhung und damit die Verringerung des Verbrauchs an Roheisen um 25,625 t zu erreichen, wurden insgesamt 1500 Nm³ Erdgas durch die Ringspalte der acht Düsen sowie 2460 Nm³ Sauerstoff und 2000 Nm³ Druckluft durch die Zentralrohre der bodenblasenden Düsen in den Brennraum geblasen. Die mithilfe der Wärmebilanz nachgerechnete durchschnittliche Temperatur des Schrotts betrug 800 °C, wobei die Primärenergie des Erdgases zu 70 % genutzt werden konnte. Der verfügbare Erdgasvordruck betrug 20 bar, wodurch Dreirohrdüsen mit je zwei Ringspalten zur Anwendung kommen konnten.

## Patentansprüche

1. Verfahren zur Stahlerzeugung unter Einsatz stückiger Eisenträger in einem um eine horizontale Drehachse (10) drehbaren Konverter (1), wobei in den heißen Konverter (1), der durch eine einem Konverterboden (3) gegenüberliegende Konvertermündung (8) mit stückigen Eisenträgern beschickt wurde, Brennstoff und oxidierendes Gas durch Düsen (4) im Bereich des Konverterbodens (3) eingedüst und die heißen Brenngase durch das Beschickungsgut (12) geleitet werden, bevor dem vorgeheizten Beschickungsgut (12) Eisenschmelze zugeführt und die Schmelze in einer Blasestellung des Konverters (1) zu Stahl gefrischt wird, **dadurch gekennzeichnet, dass** der mit stückigen Eisenträgern beschickte Konverter (1) nach einem Verschließen der Konvertermündung (8) mit einem das Beschickungsgut (12) zurückhaltenden Rost (13) aus seiner Beschickungsstellung um die Drehachse (10) in eine Vorheizstellung mit nach oben weisendem Konverterboden (3) gedreht wird, bevor der Brennstoff und das oxidierende Gas durch die Düsen (4) im Bereich des Konverterbodens (3) in den sich oberhalb des Beschickungsguts (12) bildenden Brennraum (15) eingedüst und die das Beschickungsgut (12) durchströmenden Brenngase durch den Rost (13) abgeführt werden, und dass nach dem Vorheizen des Beschickungsguts (12) der Konverter (1) zum Zuführen der Eisenschmelze in seine Beschickungsstellung zurückgedreht und die Konvertermündung (8) geöffnet wird.

2. Verfahren nach Anspruch 1, **dadurch gekennzeichnet, dass** in der Blasestellung des Konverters (1) im Beschickungsgut (12) vorhandene Brennstoffe durch bodenseitiges Eindüsen von Brennstoff und oxidierendem Gas zumindest teilweise verbrannt werden, bevor die Konvertermündung (8) mit dem Rost (13) verschlossen und der Konverter (1) in die Vorheizstellung verschwenkt wird.

3. Verfahren nach Anspruch 1 oder 2, **dadurch gekennzeichnet, dass** in der Blasestellung des Konverters (1) im Beschickungsgut (12) vorhandene Brennstoffe durch Aufblasen von Sauerstoff auf das Beschickungsgut (12) zumindest teilweise verbrannt werden, bevor die Konvertermündung (8) mit dem Rost (13) verschlossen und der Konverter (1) in die Vorheizstellung verschwenkt wird.

4. Verfahren nach einem der Ansprüche 1 bis 3, **dadurch gekennzeichnet, dass** der Konverter (1) während des Vorheizens des Beschickungsguts (12) aus der Vorheizstellung hin- und hergeschwenkt wird.

5. Verfahren nach einem der Ansprüche 1 bis 4, **dadurch gekennzeichnet, dass** in der Vorheizstellung des Konverters (1) das Beschickungsgut (12) durch Brenngase zusätzlich erhitzt wird, für die Brennstoff und oxidierendes Gas durch den Konvertermantel (6) unmittelbar in das Beschickungsgut (12) eingeblasen werden.

6. Verfahren nach einem der Ansprüche 1 bis 5, **dadurch gekennzeichnet, dass** in der Vorheizstellung des Konverters (1) die Zufuhr von Brennstoff und oxidierendem Gas durch die Düsen (4) im Bereich des Konverterbodens (3) in Abhängigkeit von der Temperatur der aus dem die Konvertermündung (8) verschließenden Rost (13) austretenden Abgase gesteuert wird.

## Claims

1. Method for producing steel using lump iron carriers in a converter (1) able to rotate about a horizontal axis of rotation (10), wherein fuel and oxidising gas are injected through nozzles (4) in the region of the converter floor (3) into the hot converter (1) which has been charged with lump iron carriers through a converter opening (8) opposite a converter floor (3), and the hot combustion gasses are fed through the charging material (12) before iron melt is supplied to the preheated charging material (12) and the melt is decarburised to steel in a blowing position of the converter (1), **characterised in that**, after closure of the converter opening (8) with a grating (13) holding back the charging material (12), the converter (1) charged with lump iron carriers is rotated about the axis of rotation (10) from its charging position into a preheating position with the converter floor (3) pointing upwards before the fuel and the oxidising gas are injected through the nozzles (4) in the region of the converter floor (3) to the combustion chamber (15) forming above the charging material (12) and the combustion gasses flowing through the charging material (12) are discharged through the grating (13), and that, after preheating of the charging material (12), for supply of the iron melt, the converter (1) is rotated back to its charging position and the converter opening (8) is opened.

2. Method as claimed in claim 1, **characterised in that**, in the blowing position of the converter (1), fuels present in the charging material (12) are at least partially burnt by floor-side injection of fuel and oxidising gas before the converter opening (8) is closed by the grating (13) and the converter (1) is pivoted to the preheating position.

3. Method as claimed in claim 1 or 2, **characterised in that**, in the blowing position of the converter (1), fuels present in the charging material (12) are at least partially burnt by the blowing of oxygen onto the charging material (12) before the converter opening (8) is closed by the grating (13) and the converter (1) is pivoted to the preheating position.

4. Method as claimed in any one of claims 1 to 3, **characterised in that**, during preheating of the charging material (12), the converter (1) is pivoted to and fro out of the preheating position.

5. Method as claimed in any one of claims 1 to 4, **characterised in that**, in the preheating position of the converter (1), the charging material (12) is additionally heated by combustion gasses, for which fuel and oxidising gas are blown directly into the charging material (12) through the converter casing (6).

6. Method as claimed in any one of claims 1 to 5, **characterised in that**, in the preheating position of the converter (1), the supply of fuel and oxidising gas through the nozzles (4) in the region of the converter floor (3) is controlled in dependence upon the temperature of the exhaust gases exiting the grating (13) closing the converter opening (8).

## Revendications

1. Procédé de production d'acier à partir de supports ferreux en morceaux dans un convertisseur (1) tournant autour d'un axe de rotation horizontal (10) selon lequel, dans le convertisseur chaud (1) qui a été chargé en supports ferreux en morceaux par une bouche (8) du convertisseur opposée au fond (3) du convertisseur, du combustible et du gaz oxydant sont injectés par des buses (4) dans la région du fond (3) du convertisseur et les gaz de combustion chauds sont guidés à travers la charge (12) avant que du fer fondu soit acheminé jusqu'à la charge (12) préchauffée et que la fonte soit affinée, le convertisseur (1) étant en position de soufflage, pour produire de l'acier, **caractérisé en ce que**, après fermeture de la bouche (8) avec une grille (13) retenant la charge (12), le convertisseur (1) chargé en supports ferreux en morceaux est mis en rotation autour de l'axe de rotation à partir de sa position de chargement jusqu'à une position de préchauffage dans laquelle le fond (3) du convertisseur est orienté vers le haut, avant que le combustible et le gaz oxydant soient injectés par les buses (4) situées dans la zone du fond (3) du convertisseur dans la chambre de combustion (15) se formant au-dessus de la charge (12) et que les gaz de combustion traversant la charge (12) soient évacués à travers la grille (13), et qu'après le préchauffage de la charge (12), le convertisseur (1) est ramené par rotation à sa position de chargement pour acheminer le fer fondu vers sa position de chargement et la bouche (8) du convertisseur est ouverte.

2. Procédé selon la revendication 1, **caractérisé en ce que**, le convertisseur (1) étant en position de soufflage, les combustibles présents dans la charge (12) sont au moins partiellement brûlés par l'injection par le fond de combustible et de gaz oxydant, avant que la bouche (8) du convertisseur soit fermée avec la grille (13) et que le convertisseur (1) soit incliné en position de préchauffage.

3. Procédé selon la revendication 1 ou 2, **caractérisé en ce que**, le convertisseur (1) étant en position de soufflage, les combustibles présents dans la charge (12) sont au moins partiellement brûlés par l'insufflation d'oxygène sur la charge (12), avant que la bouche (8) du convertisseur soit fermée avec la grille (13) et que le convertisseur (1) soit incliné en position de préchauffage.

4. Procédé selon une des revendications 1 à 3, **caractérisé en ce que**, pendant le préchauffage de la charge (12), le convertisseur (1) fait des va-et-vient dans la position de préchauffage.

5. Procédé selon une des revendications 1 à 4, **caractérisé en ce que**, le convertisseur (1) étant en position de préchauffage, la charge (12) est chauffée davantage par des gaz combustibles pour lesquels du combustible et du gaz oxydant sont insufflés directement dans la charge (12) à travers le revêtement (6) du convertisseur.

6. Procédé selon une des revendications 1 à 5, **caractérisé en ce que**, le convertisseur (1) étant en position de préchauffage, l'apport de combustible et de gaz oxydant par les buses (4) dans la région du fond (3) du convertisseur est contrôlé en fonction de la température des gaz d'échappement sortant de la grille (13) qui ferme la bouche (8) du convertisseur.
